# EUROPÄISCHE PATENTSCHRIFT

(11) **EP 2 514 939 B1**
(45) Veröffentlichungstag und Bekanntmachung des Hinweises auf die Patenterteilung: **17.06.2015**
(21) Anmeldenummer: 12163904.1
(22) Anmeldetag: 12.04.2012
(51) Int. Cl.: F01N 13/14, F01N 13/16, F16L 59/02, F16L 59/147, F01N 3/05, F01N 3/04

(54) **Abgasanlagenkomponente mit thermischer Isolierung**
Waste gas assembly components with thermal isolation
Composants d'installation de gaz d'échappement avec isolation thermique

(30) Priorität: 21.04.2011 DE 102011007854
(43) Veröffentlichungstag der Anmeldung: 24.10.2012
(73) Patentinhaber: Eberspächer Exhaust Technology GmbH & Co. KG, 66539 Neunkirchen (DE)
(72) Erfinder: Wirth, Georg, 73230 Kirchheim/Teck (DE)
(74) Vertreter: BRP Renaud & Partner mbB Rechtsanwälte Patentanwälte Steuerberater

(56) Entgegenhaltungen:
- EP-A1- 0 867 605
- EP-A1- 2 444 616
- EP-A2- 2 410 149
- WO-A1-2007/105815
- DE-A1- 4 203 998
- DE-A1-102008 051 278
- DE-B3- 10 253 508

## Beschreibung

Die vorliegende Erfindung betrifft eine Abgasanlagenkomponente für eine Abgasanlage einer Brennkraftmaschine, insbesondere eines Kraftfahrzeugs, mit den Merkmalen des Oberbegriffs des Anspruchs 1. Die Erfindung betrifft außerdem eine mit wenigstens einer solchen Komponente ausgestattete Abgasanlage.

Derartige Komponenten von Abgasanlagen sind beispielsweise Abgasbehandlungseinrichtungen, wie zum Beispiel Katalysatoren, Partikelfilter und Schalldämpfer, Einlasskrümmer, Endrohre sowie Rohrabschnitte zum Verbinden von Abgasbehandlungseinrichtungen, Krümmer und Endrohr. Zum Reduzieren der Schadstoffemissionen einer Brennkraftmaschine ist es wichtig, dass die Abgasreinigungseinrichtungen der Abgasanlage bei einem Kaltstart der Brennkraftmaschine möglichst rasch ihre Betriebstemperatur erreichen. Dies kann insbesondere dadurch unterstützt werden, dass die Abgasanlage bzw. deren Komponenten nach außen thermisch isoliert werden, um so die Abstrahlung von Wärme in die Umgebung zu reduzieren. Gleichzeitig können dadurch bei Fahrzeuganwendungen Fahrzeugbauteile, die benachbart zur Abgasanlage angeordnet sind, vor einer Überhitzung geschützt werden.

Eine gattungsgemäße Abgasanlagenkomponente ist in Form eines Abgaskrümmers aus der DE 42 03 998 A1 bekannt. Der bekannte Abgaskrümmer umfasst eine Innenhaut, die einen abgasführenden Innenbereich begrenzt, eine Außenhaut, die an einer vom Innenbereich abgewandten Außenseite der Innenhaut angeordnet ist, einen zwischen Innenhaut und Außenhaut ausgebildeten Hohlraum und eine im Hohlraum angeordnete thermische Isolierung, die wenigstens einen porösen formstabilen Formkörper aufweist.

Aus der EP 2 410 149 A2 und aus der DE 10 2008 051 278 A1 ist jeweils eine Abgasanlage bekannt, bei der ein Hohlraum eines doppelwandigen Rohrkörpers befüllt und entleert werden kann, um die thermische Isolierung des Rohrkörpers bedarfsabhängig zu variieren.

Die vorliegende Erfindung beschäftigt sich mit dem Problem, für eine Abgasanlagenkomponente bzw. für eine Abgasanlage eine verbesserte Ausführungsform anzugeben, die sich insbesondere durch eine verbesserte thermische Isolation auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, zur thermischen Isolierung wenigstens einen formstabilen Formkörper zu verwenden, der porös ausgestaltet ist oder aus einem porösen Isolationsmaterial besteht. Der Formkörper ist zwischen einer Innenhaut, die einen abgasführenden Innenbereich begrenzt, und einer außen an der Innenhaut angeordneten Außenhaut angeordnet. Ein derartiger poröser Formkörper zeichnet sich gegenüber herkömmlichen mattenartigen faserhaltigen Isolationsmaterialien durch einen deutlich geringeren Wärmeleitkoeffizienten aus. Insofern kann mit Hilfe derartiger poröser Formkörper eine besonders effektive thermische Isolation der jeweiligen Abgasanlagenkomponente erzielt werden. Ferner besitzt der Formkörper eine eigene Tragfähigkeit bzw. Formstabilität, wodurch über den Formkörper auch eine gewisse Aussteifung der jeweiligen Abgasanlagenkomponente erreicht werden kann. Denn der Formkörper kann die Innenhaut gegenüber der Außenhaut abstützen.

Entsprechend einer vorteilhaften Ausführungsform kann der jeweilige Formkörper biegesteif ausgestaltet sein, was die Tragfunktion des Formkörpers unterstützt. Zusätzlich oder alternativ kann der Formkörper an die Form des zwischen Innenhaut und Außenhaut ausgebildeten Hohlraums angepasst sein. Hierdurch ist der jeweilige Formkörper im Wesentlichen selbsttragend, was seine Handhabung vereinfacht.

Erfindungsgemäß ist der Formkörper mikroporös oder besteht aus einem mikroporösen Isolationsmaterial. Geeignete mikroporöse Materialien zum Herstellen derartiger Formkörper sind beispielsweise Schäume aus pyrogener Kieselsäure oder aus Aerogel. Zweckmäßig kann das mikroporöse Isolationsmaterial eine Porengröße von etwa 10 bis 50 nm, vorzugsweise von etwa 20 nm, aufweisen. Insbesondere kann dadurch die mittlere freie Weglänge für Gasmoleküle soweit reduziert werden, dass innerhalb der mikroporösen Struktur des Formkörpers ein Wärmeübergang durch Konvektion signifikant reduziert werden kann. Zusätzlich oder alternativ können Materialpartikel des Isolationsmaterials, aus dem der poröse Formkörper hergestellt ist, eine kugelförmige Gestalt aufweisen, wodurch sich aneinander anliegende Materialpartikel nur in sehr kleinen Kontaktpunkten berühren, was innerhalb der porösen Struktur des Formkörpers einen Wärmeübergang durch Wärmeleitung sehr stark reduziert. Dem porösen Isolationsmaterial des Formkörpers können zusätzlich oder alternativ Materialien oder Stoffe zugemischt sein, die im Infrarotbereich von Licht absorbierend wirken. Hierdurch ist es möglich innerhalb des porösen Formkörpers einen Wärmeübergang durch Wärmestrahlung signifikant zu reduzieren.

Gemäß einer vorteilhaften Ausführungsform kann die Isolierung mehrere mikroporöse Formkörper umfassen, wobei wenigstens zwei Formkörper formschlüssig ineinander greifen. Hierdurch können die Formkörper relativ zueinander lagefixiert werden, ohne dass hierzu aufwändige Befestigungsmaßnahmen erforderlich sind. Beispielsweise können zur Realisierung des genannten Formschlusses an den Formkörpern Zargen ausgebildet sein oder Nut-Feder-Konturen. Zweckmäßig ist außerdem eine Segmentierung der Formkörper, insbesondere dann, wenn die Innenwand als Kanal oder Rohr konzipiert ist und den gasführenden Innenbereich umschließt. In diesem Fall umschließt die Außenhaut zweckmäßig die Innenhaut ringförmig, wodurch sich ein ringförmiger Hohlraum ausbildet, in dem die Isolation untergebracht ist. Segmentierte Formkörper lassen sich besonders einfach in diesen Hohlraum einsetzen.

Entsprechend einer besonders vorteilhaften Ausführungsform kann der Hohlraum zur Umgebung des Abgasanlagenkörpers hin wasserdicht und gasundurchlässig ausgestaltet sein. Hierdurch wird verhindert, das Spritzwasser aus der Umgebung in den Hohlraum gelangen kann. Um gleichzeitig einen Druckausgleich zu ermöglichen, kann die Außenhaut zumindest eine Öffnung enthalten, die mittels einer wasserdichten und gasdurchlässigen Membran, z.B. in Form einer mikroperforierten Metallfolie, verschlossen ist. Zusätzlich oder alternativ kann eine Entlüftung an den Hohlraum angeschlossen sein, vorzugsweise an die Außenhaut, mit deren Hilfe ein Druckausgleich möglich ist. Gemäß einer anderen Ausführungsform kann der Hohlraum zur Umgebung der Abgasanlagenkomponenten hin wasserdicht und gasundurchlässig ausgestaltet sein. Beispielsweise kann die Außenhaut zumindest eine Öffnung enthalten, die mittels einer Hutze abgedeckt ist, die mit der Außenhaut eine von der Öffnung der Außenhaut beabstandete Öffnung zur Umgebung bildet. Hierdurch ist ein Druckausgleich bei ausreichendem Spritzwasserschutz möglich.

Gemäß einer anderen zweckmäßigen Ausführungsform können die Innenhaut und die Außenhaut rohrförmig ausgestaltet sein, während der Hohlraum und die Isolierung ringförmig ausgestaltet sind. Der jeweilige Formkörper ist dann ebenfalls ringförmig oder ringsegmentförmig konzipiert, um ihn einfach in den jeweiligen Hohlraum beim Zusammenbau der Abgasanlagenkomponente einsetzen zu können.

Entsprechend einer Weiterbildung kann ein Längsabschnitt der rohrförmigen Innenhaut durch einen Balg gebildet sein. Hierdurch ist es möglich, die Innenhaut an ihren Längsenden fest mit der Außenhaut zu verbinden. Thermisch bedingte Dehnungseffekte können dabei durch den Balg kompensiert werden. Ein derartiger Balg kann einlagig oder mehrlagig ausgestaltet werden. Besonders zweckmäßig ist dabei eine Ausführungsform, bei welcher der Balg an einer dem Innenbereich zugewandten Seite mit einem Führungsrohr abgedeckt ist. Hierdurch kann der Durchströmungswiderstand der rohrförmigen Innenhaut, deren Innenkontur durch den Balg gestört ist, im Bereich des Balgs reduziert werden. Insbesondere kann dabei das Führungsrohr den Balg nahezu bündig zu daran angrenzenden Längsabschnitten der Innenhaut abdecken, so dass die Innenkontur der Innenhaut im Bereich des Balgs nicht oder nur geringfügig gestört ist. Zweckmäßig erstreckt sich der Balg ausgehend von der Innenhaut in radialer Richtung nur nach außen, also in den Hohlraum hinein. Besonders vorteilhaft ist eine Ausführungsform, bei welcher das Führungsrohr an einem Längsende relativ zur Innenhaut oder relativ zum Balg axial fest ist und im Übrigen relativ zur Innenhaut und relativ zum Balg lose ist. Somit sind thermisch bedingte Relativbewegungen zwischen Führungsrohr und Balg bzw. zwischen Führungsrohr und Innenhaut möglich.

Erfindungsgemäß ist eine Druckeinstelleinrichtung vorgesehen, mit deren Hilfe der im Hohlraum herrschende Druck parameterabhängig einstellbar ist. Die Wärmeübertragung zwischen Innenhaut und Außenhaut, insbesondere durch Konvektion, hängt stark vom Druck im Hohlraum ab. Soll beispielsweise die thermische Isolierung verbessert werden, kann der Druck im Hohlraum unter Umgebungsdruck zur Erzielung eines mehr oder weniger ausgeprägten Vakuums abgesenkt werden. Dies kann beispielsweise während des Kaltstartbetriebs vorteilhaft sein. Ist dagegen eine besonders hohe thermische Isolierung nicht mehr erforderlich, kann der Druck im Hohlraum erhöht werden, zum Beispiel auf Umgebungsdruck oder auf einen geringfügigen Überdruck, um die Bauteilbelastung thermisch zu reduzieren.

Erfindungsgemäß ist zusätzlich oder alternativ zur Druckeinstelleinrichtung eine Befüllungs- und Entleerungseinrichtung vorgesehen, mit deren Hilfe parameterabhängig der Hohlraum mit einer Wärmeleitflüssigkeit befüllbar und davon entleerbar ist. Um die thermische Isolation weiter absenken zu können, beispielsweise um eine Überhitzung der Abgasanlagenkomponente zu vermeiden, kann mit Hilfe einer solchen Befüllungs- und Entleerungseinrichtung der Hohlraum mit einer Wärmeleitflüssigkeit befüllt werden, wodurch die Wärmeübertragung zwischen Innenhaut und Außenhaut signifikant vergrößert wird. Insbesondere kann dadurch die thermisch isolierende Wirkung des jeweiligen Formkörpers mehr oder weniger umgangen werden. Um die thermische Isolierung wieder zu verbessern, kann dann mit der Befüllungs- und Entleerungseinrichtung der Hohlraum wieder von der Wärmeleitflüssigkeit entleert werden. Es ist klar, dass eine Befüllung mit Wärmeleitflüssigkeit nur dann in Frage kommt, wenn das zur Herstellung des Formkörpers verwendete Material eine entsprechende Festigkeit gegenüber der jeweils verwendeten Wärmeleitflüssigkeit besitzt. Geeignete Wärmeleitflüssigkeiten sind beispielsweise Wasser, Glykol und dergleichen. Eine Leitung zum Entnehmen und Zuführen der Wärmeleitflüssigkeit ist dabei zweckmäßig im Einbauzustand unten, insbesondere an der tiefsten Stelle, an den Hohlraum angeschlossen, um eine möglichst weitgehende Entleerung erzielen zu können. Optional kann im Einbauzustand oben, insbesondere an der höchsten Stelle, eine Öffnung zum Be- und Entlüften des Hohlraums vorgesehen sein. Um auch hier das Eindringen von Verunreinigungen, insbesondere Spritzwasser, zu vermeiden, kann eine geeignete Ventileinrichtung vorgesehen sein. Denkbar ist auch, die Be- und Entlüftungsöffnung über eine Be- und Entlüftungsleitung an einen Vorratstank anzuschließen, in den die Wärmeleitflüssigkeit gefördert wird, wenn der Hohlraum entleert wird, und aus dem die Wärmeleitflüssigkeit bezogen wird, wenn der Hohlraum mit der Wärmeleitflüssigkeit befüllt wird. Die hin und her geförderte Flüssigkeit verdrängt im jeweiligen mit der Flüssigkeit zu befüllenden Zielraum genau soviel Luft oder sonstiges Gas, wie dem jeweiligen Ausgangsraum, aus dem die Flüssigkeit abgezogen wird, nachgefüllt werden muss. Durch die direkte Verbindung der beiden Räume kann somit auch die Luft bzw. das jeweilige Gas hin und her gefördert werden. Somit ist es auch möglich anstelle der Flüssigkeit das jeweilige Gas mittels einer entsprechenden Fördereinrichtung hin und her zu fördern; die Flüssigkeit folgt dann automatisch.

Die zuvor genannte Druckeinstelleinrichtung und/oder die vorstehend genannte Befüllungs- und Entleerungseinrichtung können eine an den Hohlraum angeschlossene Pumpe und eine Steuerung zur parameterabhängigen Betätigung der Pumpe aufweisen. Geeignete Parameter zur Betätigung der jeweiligen Einrichtung sind Fahrzeugparameter oder Zustandsparameter der Brennkraftmaschine, insbesondere die Temperatur der Brennkraftmaschine bzw. der Abgasanlage und deren Komponenten.

Der jeweilige Formkörper besitzt zweckmäßig eine offenporige Struktur, insbesondere dann, wenn der Hohlraum mit einer Wärmeleitflüssigkeit befüllbar ist und/oder wenn der Druck im Hohlraum steuerbar ist.

Gemäß einer anderen vorteilhaften Ausführungsform kann die Außenhaut als tragende Struktur ausgestaltet sein, während die Innenhaut zweckmäßig als nicht tragende Struktur ausgestaltet ist. Durch diese Bauweise kann die Außenhaut besonders einfach zum Einbinden der jeweiligen Komponente in die Abgasanlage genutzt werden, während die Innenhaut hauptsächlich zur Abgasführung dient. Bei einer derartigen Bauweise kann die Außenhaut im Vergleich zur Innenhaut dickwandig sein, während die Innenhaut im Vergleich zur Außenhaut entsprechend dünnwandig ist. Die Außenhaut kann vergleichsweise preiswert realisiert werden, zum Beispiel aus einem Ferritmaterial, da sie nur einer stark reduzierten thermischen Belastung ausgesetzt ist. Im Unterschied dazu ist die Innenhaut aus einem vergleichsweise teuren, korrosionsbeständigen Material, wie zum Beispiel aus einem aus Austenitmaterial hergestellt. Da jedoch die Innenhaut deutlich dünner realisierbar ist als die Außenhaut, ergibt sich in Kombination eine vergleichsweise preiswerte Struktur.

Die mit Hilfe der Innenhaut, dem wenigstens einen Formkörper und der Außenhaut gebildete Abgasanlagenkomponente ist insbesondere ein Rohr oder ein Gehäuse für eine Abgasbehandlungseinrichtung. Ebenso kann es sich bei besagter Komponente um einen Einlasskrümmer oder um ein Endrohr handeln.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine vereinfachte Seitenansicht eines Teilbereichs einer Abgasanlage,
- Fig. 2: eine vergrößerte Ansicht eines Details II aus Fig. 1 im Bereich einer Abgasanlagenkomponente,
- Fig. 3: eine Schnittansicht gemäß Schnittlinien III in Fig. 2,
- Fig. 4: eine Detailansicht wie in Fig. 2, jedoch bei einer anderen Ausführungsform,
- Fig. 5: eine Schnittansicht entsprechend Schnittlinien V in Fig. 4,
- Fig. 6: eine Detailansicht wie in den Fig. 2 und 4, jedoch bei einer weiteren Ausführungsform,
- Fig. 7: eine Schnittansicht entsprechend Schnittlinien VII in Fig. 6,
- Fig. 8: einen Längsschnitt durch eine Abgasanlagekomponente,
- Fig. 9: einen Querschnitt entsprechend Schnittlinien IX in Fig. 8,
- Fig. 10 und 11: Schnittansichten wie in Fig. 8, jedoch bei weiteren Ausführungsformen.

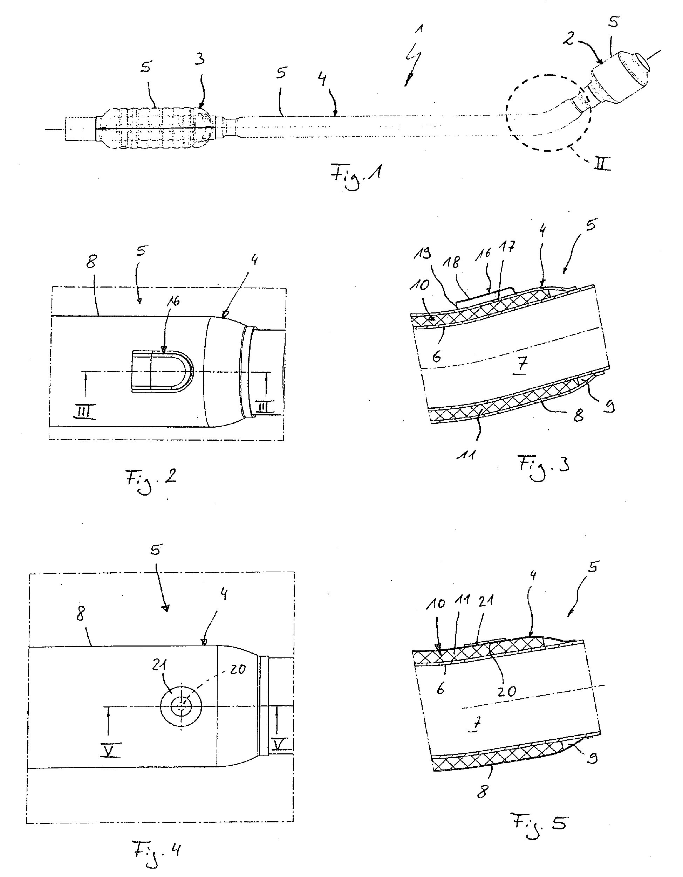

Entsprechend Fig. 1 umfasst eine Abgasanlage 1, die zum Abführen von Verbrennungsabgasen von einer hier nicht gezeigten Brennkraftmaschine dient und insbesondere gemeinsam mit dieser Brennkraftmaschine in einem Fahrzeug angeordnet sein kann, beispielsweise einen Oxidationskatalysator 2, einen Schalldämpfer 3 sowie ein Abgasrohr 4, das den Oxidationskatalysator 2 mit dem Schalldämpfer 3 verbindet. Der Oxidationskatalysator 2, der Schalldämpfer 3 und das Abgasrohr 4 bilden dabei jeweils Beispiele für Abgasanlagenkomponenten 5. Weitere Abgasanlagenkomponenten 5 sind beispielsweise ein Einlasskrümmer, eine Turbine eines Abgasturboladers, ein Partikelfilter, ein SCR-Katalysator, ein NOX-Speicherkatalysator sowie ein Endrohr.

Die vorliegende Erfindung wird anhand des Abgasrohrs 4 als exemplarische Abgasanlagenkomponente 5 erläutert. Es ist klar, dass die Erfindung in entsprechender Weise auch bei einer beliebigen anderen Abgasanlagenkomponente 5 realisierbar ist.

Gemäß den Figuren 3, 5, 7-11 besitzt die Abgasanlagenkomponente 5, im Beispiel also das Abgasrohr 4 eine Innenhaut 6, die einen Innenbereich 7 begrenzt. Im Betrieb der Abgasanlage 1 dient dieser Innenbereich 7 zur Abgasführung. Bei der rohrförmigen Abgasanlagenkomponenten 5 ist auch die Innenhaut 6 rohrförmig ausgestaltet, so dass sie den Innenbereich 7 umschließt. Ferner umfasst die jeweilige Komponente 5 eine Außenhaut 8, die an einer vom Innenbereich 7 abgewandten Außenseite der Innenhaut 6 angeordnet ist, derart, dass zwischen Innenhaut 6 und Außenhaut 8 ein Hohlraum 9 ausgebildet ist. Bei einer rohrförmigen Komponente 5 ist auch die Außenhaut 8 rohrförmig ausgestaltet, so dass sie die Innenhaut 6 koaxial umschließt. Im Hohlraum 9 ist eine thermische Isolierung 10 angeordnet, die erfindungsgemäß zumindest einen mikroporösen Formkörper 11 aufweist. Der jeweilige Formkörper 11 ist formstabil und biegesteif ausgestaltet. Ferner ist der als Formkörper ausgestaltete Formkörper 11 an die Form des Hohlraums 9 weitgehend adaptiert.

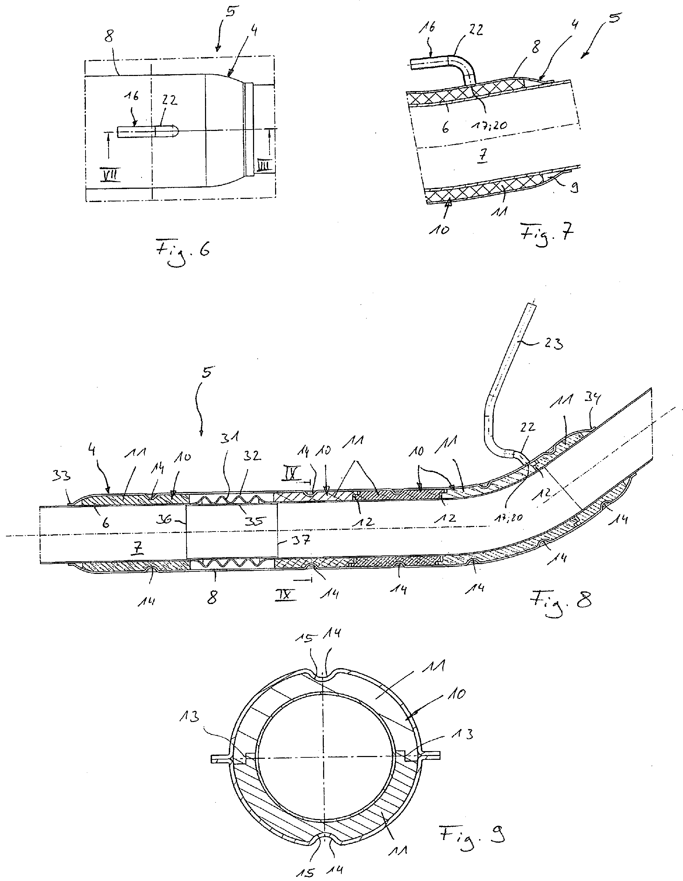

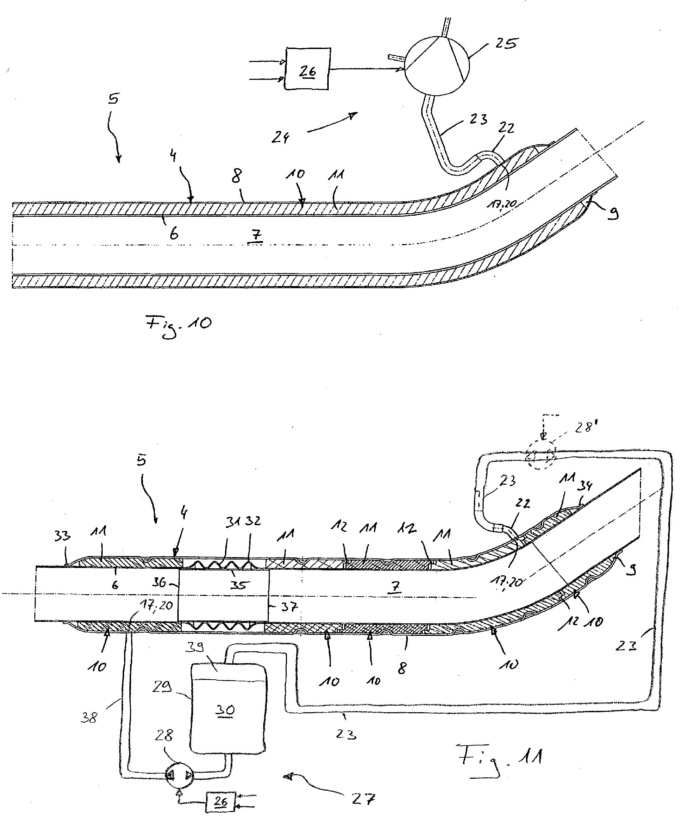

Wie sich beispielsweise den Figuren 8, 9 und 11 entnehmen lässt, umfasst die Isolierung 10 zweckmäßig mehrere Formkörper 11. Diese können z.B. so ausgestaltet sein, dass benachbarte bzw. aneinander angrenzende Formkörper 11 formschlüssig ineinander greifen. In den Längsschnitten der Figuren 8 und 11 sind zargenartige Konturen oder Nut-Feder-Konturen 12 erkennbar, über welche benachbarte Formkörper 11 axial ineinander eingreifen und sich dabei radial überlappen. Im Querschnitt der Fig. 9 sind ebenfalls zargenartige Konturen bzw. Nut-Feder-Konturen 13 erkennbar, über welche segmentartige Formkörper 11 in der Umfangsrichtung ineinander eingreifen und sich dadurch radial überlappen. Die Schnittebene in Fig. 9 ist außerdem im Bereich von Erhebungen 14 gewählt, die an der Außenhaut 8 punktförmig ausgebildet sind und von der Außenhaut 8 nach innen in Richtung Innenhaut 6, also in den Hohlraum 9 vorstehen. Komplementär dazu sind die jeweiligen Formkörper 11 mit passenden Vertiefungen 15 ausgestattet, in welche die Vorsprünge 14 der Außenhaut 8 formschlüssig radial eingreifen. Hierdurch kann eine effektive Lagefixierung der betroffenen Formkörper 11 realisiert werden.

Die in den Figuren 2 und 3 gezeigte Ausführungsform ist mit einem Spritzwasserschutz 16 für den Hohlraum 9 ausgestattet. Der Hohlraum 9 ist dabei zur Umgebung der Abgasanlage 1 hin spritzwassergeschützt und gasdurchlässig ausgestaltet. Die Gasdurchlässigkeit wird dabei mit Hilfe wenigstens einer Öffnung 17 realisiert, die hierzu in der Außenhaut 8 ausgebildet ist. Diese Öffnung 17 ist mittels einer Hutze 18 abgedeckt. Diese Hutze 18 bildet zusammen mit der Außenhaut 8 eine weitere Öffnung 19 zur Umgebung, die von der zuvor genannten Öffnung 17 der Außenhaut 8 beabstandet ist. Hierdurch wird mit Hilfe der Hutze 18 der Spritzwasserschutz 16 gebildet. Erkennbar ist die Hutze 18 abgesehen von ihrer Öffnung 19 im Übrigen fest und dicht mit der Außenhaut 8 verbunden, wobei sich insbesondere eine U-förmige Anlagekontur ergibt.

Im Unterschied dazu zeigen die Figuren 4 und 5 eine Ausführungsform, bei welcher der Hohlraum 9 zur Umgebung der Abgasanlagenkomponente 5 hin wasserdicht und gasdurchlässig ausgestaltet ist. Erreicht wird dies beispielsweise dadurch, dass die Außenhaut 8 zumindest eine Öffnung 20 enthält, die mittels einer Membran 21 verschlossen ist, wobei diese Membran 21 wasserdicht und gasdurchlässig ausgestaltet ist.

Bei der in den Figuren 6 und 7 gezeigten Ausführungsform ist die Außenhaut 8 wieder mit einer Öffnung 17 oder 20 ausgestattet, wobei an diese Öffnung 17, 20 ein Rohrstück 22 angeschlossen ist. Dieses Rohrstück 22 kann nun als Spritzwasserschutz 16 dienen oder gemäß Fig. 8 zum Anschließen einer Leitung 23 verwendet werden. Diese Leitung 23 kann insbesondere zur Realisierung einer Entlüftung des Hohlraums 9 genutzt werden.

Besonders vorteilhaft lässt sich gemäß Fig. 10 mit Hilfe der Leitung 23 eine Druckeinstelleinrichtung 24 über die Leitung 23 an den Hohlraum 9 anschließen. Mit Hilfe der Druckeinstelleinrichtung 24 kann der im Hohlraum 9 herrschende Druck abhängig von Parametern eingestellt werden. Im Beispiel umfasst die Druckeinstelleinrichtung 24 eine saugseitig an den Hohlraum 9 fluidisch angeschlossene Evakuierungspumpe 25 sowie eine Steuerung 26 zum Betätigen der Pumpe 25 abhängig von Parametern. Geeignete Parameter sind insbesondere Fahrzeugparameter oder Zustandsparameter der Brennkraftmaschine. Beispielsweise soll für einen Kaltstaltvorgang der Hohlraum 9 evakuiert werden, um die thermische Isolation zu verbessern. Sobald die jeweilige Abgasanlagenkomponente 5 bzw. die Abgasanlage 1 ihre normale Betriebstemperatur erreicht hat, kann das Vakuum wieder aufgehoben werden, da dann auch eine reduzierte thermische Isolation ausreichend ist.

Alternativ kann gemäß Fig. 11 an den Hohlraum 9 eine Befüllungs- und Entleerungseinrichtung 27 angeschlossen sein. Eine derartige Einrichtung 27 umfasst beispielsweise eine Fördereinrichtung 28 mit umkehrbarer Förderrichtung sowie einen Tank 29 zur Bevorratung einer Wärmeleitflüssigkeit 30, wie zum Beispiel Wasser oder Glykol. Mit Hilfe der Befüllungs- und Entleerungseinrichtung 27 kann abhängig von Parametern der Hohlraum 9 mit der Wärmeleitflüssigkeit 30 mehr oder weniger befüllt werden. Ebenso kann mit Hilfe der Einrichtung 27 die Wärmeleitflüssigkeit 30 wieder aus dem Hohlraum 9 entfernt werden. Durch das mehr oder weniger starke Befüllen des Hohlraums 9 mit der Wärmeleitflüssigkeit 30 wird die thermisch isolierende Wirkung des jeweiligen Formkörpers 11 entsprechend mehr oder weniger reduziert. Somit kann besagte Einrichtung 27 dazu verwendet werden, die thermische Isolation 10 bedarfsabhängig einzustellen. Die Verwendung einer derartigen Einrichtung 27 setzt voraus, dass das jeweilige poröse Material, aus dem die Formkörper 11 hergestellt sind, eine ausreichende Resistenz gegenüber der verwendeten Wärmeleitflüssigkeit 30 besitzen. Die Befüllungs- und Entleerungseinrichtung 37 ist zweckmäßig ebenfalls analog zur Druckeinstelleinrichtung 24 mit einer Steuerung 26 ausgestattet, um die Fördereinrichtung 28 abhängig von den eingehenden Parametern zu betätigen. Die Parameter können dabei die gleichen sein wie bei der zuvor beschriebenen Ausführungsform mit der Druckeinstelleinrichtung 24.

Eine Leitung 38 zum Entnehmen und Zuführen der Wärmeleitflüssigkeit 30 ist dabei zweckmäßig im Einbauzustand unten, insbesondere an der tiefsten Stelle, an den Hohlraum 9 angeschlossen, um eine möglichst weitgehende Entleerung erzielen zu können. Hierzu ist wieder eine die Außenhaut 8 durchdringende Öffnung 17 bzw. 20 vorgesehen. Optional kann im Einbauzustand oben, insbesondere an der höchsten Stelle, außerdem eine Öffnung 17 bzw. 20 zum Be- und Entlüften des Hohlraums 9 vorgesehen sein. Um auch hier das Eindringen von Verunreinigungen, insbesondere Spritzwasser, zu vermeiden, kann eine geeignete Ventileinrichtung (nicht gezeigt) vorgesehen sein. Bei der in Fig. 11 gezeigten speziellen Ausführungsform ist die oben liegende Be- und Entlüftungsöffnung 17 bzw. 20 über eine Be- und Entlüftungsleitung 23 an den Vorratstank 29 angeschlossen. Beim Befüllen des Hohlraums 9 mit der Wärmeleitflüssigkeit 30 über die untere Öffnung 17 bzw. 20 wird diese aus dem Tank 29 herausgefördert, wodurch ein Gasvolumen 39, das sich im Tank 29 oberhalb der Wärmeleitflüssigkeit 30 befindet, zunimmt. Gleichzeitig entweicht beim Befüllen des Hohlraums 9 mit Wärmeleitflüssigkeit 30 Gas über die obere Öffnung 17 bzw. 20 und gelangt über die Ent- und Belüftungsleitung 23 in den Tank 29. Beim Entleeren des Hohlraums 9 von der Flüssigkeit 30 verhält es sich umgekehrt, so dass Gas vom Tank 29 in den Hohlraum 9 zurückströmt. Die hin und her geförderte Flüssigkeit 30 verdrängt im jeweiligen mit der Flüssigkeit 30 zu befüllenden Zielraum, nämlich den Hohlraum 9 beim Befüllen und den Tank 29 beim Entleeren, genau soviel Luft oder sonstiges Gas, wie dem jeweiligen Ausgangsraum, aus dem die Flüssigkeit abgezogen wird, nämlich dem Tank 29 beim Befüllen und dem Hohlraum 9 beim Entleeren, nachgefüllt werden muss. Durch die direkte Verbindung der beiden Räume (9 und 29) kann somit auch die Luft bzw. das jeweilige Gas hin und her gefördert werden. Somit ist es auch möglich anstelle der Flüssigkeit 30 das jeweilige Gas mittels einer entsprechenden, in Fig. 11 mit unterbrochener Linie angedeuteten Fördereinrichtung 28' hin und her zu fördern; die Flüssigkeit 30 folgt dann automatisch.

Für die Ausführungsformen der Fig. 10 und 11 mit einer Druckeinstelleinrichtung 24 bzw. mit einer Befüllungs- und Entleerungseinrichtung 27 ist es zweckmäßig, wenn der jeweilige Formkörper 11 eine offenporige, insbesondere mikroporöse, Struktur besitzt.

Es ist auch eine kombinierte Ausführungsform denkbar, die sowohl eine Druckeinstelleinrichtung 24 gemäß den Ausführungen zu Fig. 10 als auch eine Befüllungs- und Entleerungseinrichtung 27 gemäß den Ausführungen zu Fig. 11 aufweist.

Bei den Ausführungsformen der Figuren 8 und 11 ist ein Längsabschnitt der rohrförmigen Innenhaut 6 durch einen Balg 31 gebildet. Der Balg 31 kann dabei, wie hier gezeigt, integral an der jeweiligen Innenhaut 6 ausgeformt sein. Ebenso ist es möglich, den Balg 31 als separates Bauteil vorzusehen und an die entsprechenden, angrenzenden Längsabschnitte der Innenhaut 6 anzubauen, beispielsweise anzuschweißen oder anzulöten. Der Balg 31 kann eine einlagige oder aber eine mehrlagige Wand aufweisen. Der Balg 31 ist hier so konzipiert, dass er ausgehend von der Innenhaut 6 ausschließlich radial nach außen absteht, also in den Hohlraum 9 hineinragt, ohne dabei die Außenhaut 8 zu berühren. Insbesondere verbleibt somit ein Ringraum 32 bzw. ein Radialabstand 32 zwischen Balg 31 und Außenhaut 8. Durch die Verwendung eines derartigen Balgs 31 kann die Außenhaut 8 im Bereich ihrer Längsenden 33, 34 fest mit der Innenhaut 6 verbunden werden, beispielsweise mittels Schweißverbindung oder Lötverbindung. Thermisch bedingte Relativbewegungen zwischen der Innenhaut 6 und der Außenhaut 8 können dabei durch den Balg 31 kompensiert werden. Um den Strömungswiderstand der Innenhaut 6 im Bereich des Balgs 31 zu reduzieren, kann gemäß den Figuren 8 und 11 an einer dem Innenbereich 7 zugewandten Seite ein Führungsrohr 35 vorgesehen sein, das sich im Bereich des Balgs 31 erstreckt und dabei den Balg 31 zum Innenbereich 7 hin abdeckt. Dieses Führungsrohr 35 trägt dabei nur geringfügig an der Innenseite der Innenhaut 7 auf und schließt insbesondere im Wesentlichen bündig mit dieser Innenseite ab. Das Führungsrohr 35 kann zum Beispiel im Bereich einer seiner Längsenden 36 oder 37 fest mit der Innenhaut 6 und/oder fest mit dem Balg 31 verbunden sein, während es im Übrigen relativ zur Innenhaut 6 und relativ zum Balg 31 lose ist. Somit sind auch thermisch bedingte Relativbewegungen zwischen dem Führungsrohr 35 und der Innenhaut 6 bzw. zwischen dem Führungsrohr 35 und dem Balg 31 möglich.

Zweckmäßig ist die hier als Rohrstück konzipierte Komponente 5 zumindest bei den Ausführungsformen der Figuren 8 und 11 so gestaltet, dass die Außenhaut 8 eine tragende Struktur bildet, während die Innenhaut 6 eine nicht tragende Struktur bildet. Dementsprechend ist die Außenhaut 8 im Vergleich zur Innenhaut 6 mit einer größeren Wandstärke gebildet.

## Patentansprüche

1. Abgasanlagenkomponente für eine Abgasanlage (1) einer Brennkraftmaschine, insbesondere eines Kraftfahrzeugs,
- mit einer Innenhaut (6), die einen abgasführenden Innenbereich (7) begrenzt,
- mit einer Außenhaut (8), die an einer vom Innenbereich (7) abgewandten Außenseite der Innenhaut (6) angeordnet ist,
- mit einem zwischen Innenhaut (6) und Außenhaut (8) ausgebildeten Hohlraum (9),
- mit einer im Hohlraum (9) angeordneten thermischen Isolierung (10),
- wobei die Isolierung (10) wenigstens einen porösen formstabilen Formkörper (11) aufweist,
**dadurch gekennzeichnet,**
- **dass** eine Druckeinstelleinrichtung (24), mit deren Hilfe der im Hohlraum (9) herrschende Druck parameterabhängig einstellbar ist, und/oder eine Befüllungs- und Entleerungseinrichtung (27), mit deren Hilfe der Hohlraum (9) mit einer Wärmeleitflüssigkeit befüllbar und davon entleerbar ist, vorgesehen ist/sind,
- **dass** der jeweilige Formkörper (11) mikroporös ausgestaltet ist oder aus einem mikroporösen Material besteht.

2. Abgasanlagenkomponente nach Anspruch 1,
**dadurch gekennzeichnet,**
- **dass** der jeweilige Formkörper (11) biegesteif ausgestaltet ist, und/oder
- **dass** der jeweilige Formkörper (11) an die Form des Hohlraums (9) angepasst ist.

3. Abgasanlagenkomponente nach Anspruch 1 oder 2,
**dadurch gekennzeichnet,**
**dass** der Formkörper (11) Poren mit einer Porengröße kleiner als 50 nm oder kleiner als 20 nm aufweist.

4. Abgasanlagenkomponente nach einem der Ansprüche 1 bis 3,
**dadurch gekennzeichnet,**
**dass** die Isolierung (10) mehrere Formkörper (11) umfasst, die formschlüssig ineinander greifen.

5. Abgasanlagenkomponente nach einem der Ansprüche 1 bis 4,
**dadurch gekennzeichnet,**
- **dass** der Hohlraum (9) zur Umgebung der Abgasanlagenkomponente (5) wasserdicht und gasundurchlässig ausgestaltet ist,
- **dass** die Außenhaut (8) zumindest eine Öffnung (20) enthält, die mittels einer wasserdichten und gasdurchlässigen Membran (21) verschlossen ist und/oder dass eine Entlüftung (23) an den Hohlraum (9) fluidisch angeschlossen ist.

6. Abgasanlagenkomponente nach einem der Ansprüche 1 bis 5,
**dadurch gekennzeichnet,**
- **dass** der Hohlraum (9) zur Umgebung der Abgasanlagenkomponente (5) wasserdicht und gasundurchlässig ausgestaltet ist,
- **dass** die Außenhaut (8) zumindest eine Öffnung (17) enthält, an die ein Rohrkörper (22) angeschlossen ist oder die mittels einer Hutze (18) abgedeckt ist, die mit der Außenhaut (8) eine von der Öffnung (17) der Außenhaut (8) beabstandete Öffnung (19) zur Umgebung bildet.

7. Abgasanlagenkomponente nach einem der Ansprüche 1 bis 6,
**dadurch gekennzeichnet,**
**dass** die Innenhaut (6) und die Außenhaut (8) rohrförmig ausgestaltet sind, während der Hohlraum (9) und die Isolierung (10) ringförmig ausgestaltet sind.

8. Abgasanlagenkomponente nach Anspruch 7,
**dadurch gekennzeichnet,**
**dass** ein Längsabschnitt der Innenhaut (6) durch einen Balg (31) gebildet ist.

9. Abgasanlagenkomponente nach Anspruch 8,
**dadurch gekennzeichnet,**
**dass** der Balg (31) an einer dem Innenbereich (7) zugewandten Seite mit einem Führungsrohr (35) abgedeckt ist, wobei insbesondere vorgesehen sein kann, dass das Führungsrohr (35) an einem Längsende (36, 37) relativ zur Innenhaut (6) oder zum Balg (31) axial fest ist und im Übrigen relativ zur Innenhaut (6) und zum Balg (31) lose ist, und/oder dass das Führungsrohr (35) eine durch den Balg (31) gebildete Unterbrechung der Innenhaut (6) lückenlos und ohne wesentlichen Querschnittssprung verschließt.

10. Abgasanlagenkomponente nach einem der Ansprüche 1 bis 9,
**dadurch gekennzeichnet,**
**dass** die Druckeinstelleinrichtung (24) eine saugseitig an den Hohlraum (9) fluidisch angeschlossene Evakuierungspumpe (25) und eine Steuerung (26) zur parameterabhängigen Betätigung der Evakuierungspumpe (25) aufweist.

11. Abgasanlagenkomponente nach einem der Ansprüche 1 bis 10,
**dadurch gekennzeichnet,**
**dass** die Befüllungs- und Entleerungseinrichtung (27) eine an den Hohlraum (9) fluidisch angeschlossene Fördereinrichtung (28), einen Tank (29) und eine Steuerung zur parameterabhängigen Betätigung der Fördereinrichtung (28) aufweist.

12. Abgasanlagenkomponente nach einem der Ansprüche 1 bis 11,
**dadurch gekennzeichnet,**
**dass** der jeweilige Formkörper (11) eine offenporige Struktur besitzt.

13. Abgasanlagenkomponente nach einem der Ansprüche 1 bis 11,
**dadurch gekennzeichnet, dass** die Außenhaut (8) als tragende Struktur ausgestaltet ist, während die Innenhaut (6) als nicht tragende Struktur ausgestaltet ist.

14. Abgasanlage mit wenigstens einem Abgas führende Rohr und wenigstens einer Abgasanlagenkomponente (5) nach einem der Ansprüche 1 bis 13.

## Claims

1. Exhaust system component for an exhaust system (1) of an internal combustion engine, in particular of a motor vehicle,
- comprising an inner shell (6) which defines an exhaust-gas-guiding inner region (7);
- comprising an outer shell (8) arranged on an outer side of the inner shell (6) facing away from the inner region (7),
- comprising a cavity (9) between the inner shell (6) and the outer shell (8),
- comprising heat insulation (10) arranged in the cavity (9),
- the insulation (10) comprising at least one porous, dimensionally stable moulding (11),
**characterised in that**
- a pressure setting means (24) is provided, by means of which the pressure prevailing in the cavity (9) can be set depending upon parameters, and/or a filling and emptying means (27) is provided for filling the cavity with a heat-conducting fluid and for emptying heat-conducting fluid from the cavity (9),
- each moulding (11) is microporous or consists of a microporous material.

2. Exhaust system component according to claim 1, **characterised in that**,
- each moulding (11) is flexurally rigid, and/or
- each moulding (11) is adapted to the shape of the cavity (9).

3. Exhaust system component according to either claim 1 or claim 2, **characterised in that** the moulding (11) comprises pores having a pore size smaller than 50 nm or smaller than 20 nm.

4. Exhaust system component according to any of claims 1 to 3, **characterised in that** the insulation (10) comprises a plurality of mouldings (11) which interlock with each other.

5. Exhaust system component according to any of claims 1 to 4, **characterised in that**
- the cavity (9) is water-tight and gas-impermeable to the environment of the exhaust system component (5)
- the outer shell (8) includes at least one opening (20) which is sealed by a water-tight and gas-permeable membrane (21) and/or **in that** a vent (23) is fluidically connected to the cavity (9).

6. Exhaust system component according to any of claims 1 to 5, **characterised in that**
- the cavity (9) is water-tight and gas-impermeable to the environment of the exhaust system component (5)
- the outer shell (8) includes at least one opening (17) to which a tubular body (22) is connected or which is covered by a hood (18) which, together with the other shell (8), forms an opening (19) to the environment which is at a distance from the opening (17) in the outer shell (8).

7. Exhaust system component according to any of claims 1 to 6, **characterised in that** the inner shell (6) and the outer shell (8) have a tubular shape whereas the cavity (9) and the insulation (10) have an annular shape.

8. Exhaust system component according to claim 7, **characterised in that** a longitudinal portion of the inner shell (6) is formed by a bellows (31).

9. Exhaust system component according to claim 8, **characterised in that** the bellows (31) is covered on one side facing the inner region (7) by a guide tube (35), it being possible to provide in particular that the guide tube (35) is axially fixed on a longitudinal end (36, 37) relative to the inner shell (6) or to the bellows (31) and is otherwise loose relative to the inner shell (6) and to the bellows (31), and/or **in that** the guide tube (35) seals an opening, formed by the bellows (31), in the inner shell (6) in a continuous manner and without a significant change in cross section.

10. Exhaust system component according to any of claims 1 to 9, **characterised in that** the pressure setting means (24) comprises an evacuation pump (25), fluidically connected to the cavity (9) on the suction side, and a control unit (26) for activating the evacuation pump (25) depending on the parameters.

11. Exhaust system component according to any of claims 1 to 10, **characterised in that** the filling- and emptying means (27) comprise a conveying means (28) fluidically connected to the cavity (9), a tank (29), and a control unit for activating the conveying means (28) depending on the parameters.

12. Exhaust system component according to any of claims 1 to 11, **characterised in that** each moulding (11) has an open-pore structure.

13. Exhaust system component according to any of claims 1 to 11, **characterised in that** the outer shell (8) is formed as a supporting structure, whereas the inner shell (6) is formed as a non-supporting structure.

14. Exhaust system comprising at least one exhaust-gas-guiding tube and at least one exhaust system component (5) according to any of claims 1 to 13.

## Revendications

1. Élément d'installation de gaz d'échappement pour une installation de gaz d'échappement (1) d'un moteur à combustion interne, en particulier d'un véhicule à moteur,
- avec une paroi intérieure (6) qui délimite une zone intérieure (7) canalisant les gaz d'échappement,
- avec une paroi extérieure (8) qui est disposée au niveau du côté extérieur de la paroi intérieure (6), à l'opposé de la zone intérieure (7),
- avec une cavité (9) formée entre la paroi intérieure (6) et la paroi extérieure (8),
- avec une isolation thermique (10) disposée dans la cavité (9),
- l'isolation (10) présentant au moins un corps moulé (11) poreux et indéformable,
**caractérisé en ce que**
- est ou sont prévus un dispositif de réglage de la pression (24), à l'aide duquel la pression régnant dans la cavité (9) peut être réglée sur la base de paramètres, et/ou un dispositif de remplissage et de vidange (27), à l'aide duquel la cavité (9) peut être remplie d'un fluide caloporteur et en être vidée,
- le corps moulé (11) respectif est de structure microporeuse ou est composé d'un matériau microporeux.

2. Élément d'installation de gaz d'échappement selon la revendication 1, **caractérisé en ce que**
- le corps moulé (11) respectif est de structure rigide et/ou
- le corps moulé (11) respectif est adapté à la forme de la cavité (9).

3. Élément d'installation de gaz d'échappement selon la revendication 1 ou 2,
**caractérisé en ce que**
le corps moulé (11) présente des pores dont la taille est inférieure à 50 nm ou inférieure à 20 nm.

4. Élément d'installation de gaz d'échappement selon l'une des revendications 1 à 3,
**caractérisé en ce que**
l'isolation (10) comprend plusieurs corps moulés (11) qui s'imbriquent les uns dans les autres par complémentarité de formes.

5. Élément d'installation de gaz d'échappement selon l'une des revendications 1 à 4,
**caractérisé en ce que**
- la cavité (9) destinée à l'environnement de l'élément d'installation de gaz d'échappement (5) est de structure étanche à l'eau et imperméable au gaz,
- la paroi extérieure (8) comprend tout au moins une ouverture (20) qui est obturée au moyen d'une membrane (21) étanche à l'eau et perméable au gaz et/ou **caractérisé en ce qu'**une aération (23) est raccordée fluidiquement à la cavité (9).

6. Élément d'installation de gaz d'échappement selon l'une des revendications 1 à 5,
**caractérisé en ce que**
- la cavité (9) destinée à l'environnement de l'élément d'installation de gaz d'échappement (5) est de structure étanche à l'eau et imperméable au gaz,
- la paroi extérieure (8) comprend tout au moins une ouverture (17) à laquelle un corps tubulaire (22) est raccordé, ou qui est recouverte au moyen d'une calotte (18) qui forme avec la paroi extérieure (8) une ouverture (19) située à distance de l'ouverture (17) de la paroi extérieure (8), en vue de former un environnement.

7. Élément d'installation de gaz d'échappement selon l'une des revendications 1 à 6,
**caractérisé en ce que**
la paroi intérieure (6) et la paroi extérieure (8) sont de structure tubulaire, tandis que la cavité (9) et l'isolation (10) sont de structure annulaire.

8. Élément d'installation de gaz d'échappement selon la revendication 7,
**caractérisé en ce que**
une section longitudinale de la paroi intérieure (6) est formée par un soufflet (31).

9. Élément d'installation de gaz d'échappement selon la revendication 8,
**caractérisé en ce que**
le soufflet (31) est recouvert par un tube de guidage (35) au niveau d'un côté situé à l'opposé de la zone intérieure (7), où il peut être prévu en particulier que le tube de guidage (35) soit fixé axialement à une extrémité longitudinale (36, 37) par rapport à la paroi intérieure (6) ou au soufflet (31) et qu'il ne soit par ailleurs pas fixé par rapport à la paroi intérieure (6) et au soufflet (31), et/ou **caractérisé en ce que** le tube de guidage (35) obture, complètement et sans saut de section transversale remarquable, une interruption de la paroi intérieure (6) formée par le soufflet (31).

10. Élément d'installation de gaz d'échappement selon l'une des revendications 1 à 9,
**caractérisé en ce que**
le dispositif de réglage de la pression (24) présente, du côté de l'aspiration, une pompe d'évacuation (25) bénéficiant d'un raccord fluidique avec la cavité (9), ainsi qu'une commande (26) destinée à l'actionnement de la pompe d'évacuation (25) sur la base de paramètres.

11. Élément d'installation de gaz d'échappement selon l'une des revendications 1 à 10,
**caractérisé en ce que**
le dispositif de remplissage et de vidange (27) présente un dispositif de transfert (28) bénéficiant d'un raccord fluidique avec la cavité (9), ainsi qu'un réservoir (29) et une commande destinée à l'actionnement du dispositif de transfert (28) sur la base de paramètres.

12. Élément d'installation de gaz d'échappement selon l'une des revendications 1 à 11,
**caractérisé en ce que**
le corps moulé (11) respectif possède une structure à pores ouverts.

13. Élément d'installation de gaz d'échappement selon l'une des revendications 1 à 11,
**caractérisé en ce que**
la paroi extérieure (8) est conçue en tant que structure porteuse, tandis que la paroi intérieure (6) est conçue en tant que structure non porteuse.

14. Installation de gaz d'échappement avec au moins un tube canalisant les gaz d'échappement et au moins un élément d'installation de gaz d'échappement (5) selon l'une des revendications 1 à 13.
